# EUROPEAN PATENT APPLICATION

(11) **EP 3 011 927 A1**
(43) Date of publication of application: **27.04.2016**
(21) Application number: 14814045.2
(22) Date of filing: 13.06.2014
(51) Int. Cl.: A61C 7/14, A61C 7/28

(54) **INDIVIDUALLY TAILORED LINGUAL ORTHODONTIC BRACKET AND METHOD FOR MANUFACTURING SAME BRACKET**

(30) Priority: 20.06.2013 KR 20130071100
(71) Applicant: Lee, Jong Ho, Pohang-si, Gyeongsangbuk-do 790-828 (KR)
(72) Inventor: Lee, Jong Ho, Pohang-si, Gyeongsangbuk-do 790-828 (KR)
(74) Representative: Leihkauf, Steffen Falk
(86) International application number: PCT/KR2014/005197
(87) International publication number: WO 2014/204137

(57) **Abstract**

The present invention relates to an individually tailored lingual orthodontic bracket and a method for manufacturing the bracket and, more particularly, to an individually tailored lingual orthodontic bracket and a method for manufacturing the bracket, wherein a bracket base, which is used for lingual orthodontics, is cast to manufacture a bracket, which is tailored to individual teeth of a patient, such that the bracket can be attached in an accurate position during an orthodontic procedure, without falling off from the teeth, thereby improving the orthodontic efficiency. Provided are a manufacturing method and a bracket fabricated by the manufacturing method, the method including: cutting individual teeth from a malocclusion model, which has been modeled on the patient, and rearranging them in an ideal position; fabricating a set-up model and replicating the set-up model; performing pin work on the replicated set-up model and expanding the base of the bracket using a resin to prepare casting; injecting an investment into a casting ring, which has been prepared for casting, to be invested; and burning out the resin and casting the melted material.

## Description

### [Technical Field]

The present invention relates to an individually tailored lingual orthodontic bracket and a method for manufacturing the bracket, and more particularly, to an individually tailored lingual orthodontic bracket and a method for manufacturing the bracket, wherein a bracket base, which is used for lingual orthodontics, is cast to manufacture a bracket, which is tailored to individual teeth of a patient, such that the bracket can be attached in an accurate position during an orthodontic procedure, without falling off from the teeth, thereby improving the orthodontic efficiency.

### [Background Art]

There are many people whose teeth (or dentition) are not even caused by abnormal growth of teeth or jawbone, or bad habits when they were young. When their teeth (or dentition) are not even, they have several difficulties in everyday lives.

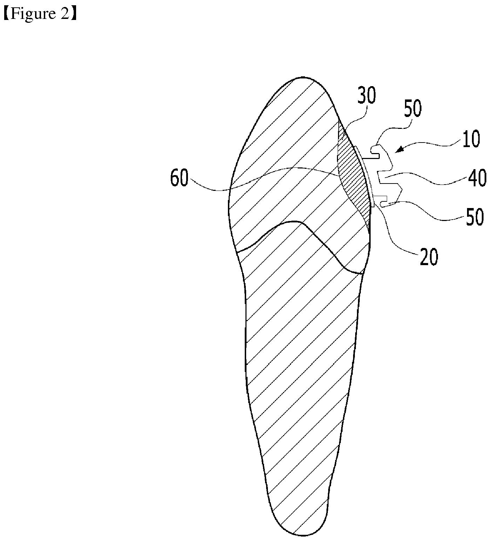

In order to solve these kinds of limitations, as shown in FIG. 2, orthodontics are performing using a bracket 10 including a slot 40 in which a wire is inserted to grant an orthodontic force, wings 50 formed at both sides of the slot 40 in order to fix the wire inserted into the slot 40 with a rubber ring or a ligature wire, and a bracket base 20 attached to a tooth surface 60.

During the orthodontics, the bracket 10 is attached to the labial side or lingual side of the teeth. Recently, on the grounds of interpersonal relation, appearance, etc., a lingual orthodontic treatment is being used much more.

For the lingual orthodontic treatment, an indirect bonding technique is performed in order to achieve an ideal location of the bracket 10 unlike the labial orthodontic treatment.

That is, a set-up model in which individual teeth are cut from a malocclusion model obtained from a patient and are rearranged in an ideal location is manufactured, and then the lingual orthodontic bracket 10 is attached to an accurate location on the set-up model. Thus, individual transfer trays are manufactured to transfer the bracket 10 to the patient's tooth surface on the set-up model, and the bracket 10 is attached in the patient's oral cavity.

On the other hand, in the lingual orthodontics, a resin base 30 is typically formed by filling a resin between the bracket base 20 and the tooth surface 60 to compensate for shapes of various lingual surfaces.

Korean Patent No. 10-0895946 discloses "a bracket for lingual orthodontic treatment and a method of manufacturing the bracket". The method includes manufacturing a set-up model in which individual teeth are cut from a malocclusion model obtained from a patient and are rearranged in an ideal location, a cutting a dental metal thin plate having unevenness formed on one surface thereof in sizes according to the individual lingual teeth surfaces of the manufacture the set-up model and having ductility, manufacturing a metal base having a surface larger than a bracket base by pressing the cut metal thin plate on the individual lingual teeth surfaces of the set-up model, adhering the metal base closely to the lingual teeth surface of the set-up model coated with a dental separator and then performing silver-soldering or laser welding between the bracket base and the metal base using an indirect attachment bracket positioner for orthodontics, and separating and acquiring a bracket from the lingual teeth surface on the set-up model.

However, when the resin base is formed by filling the resin between the bracket base and the tooth surface, the resin base becomes so thick, and thus a distance between the resistance center of tooth and the slot of the bracket to which a force is applied increases as much. Accordingly, there is a limitation in that the bracket base and the resin base can be easily separated and thus it is difficult to control the teeth.

Also, when the treatment period increases, more saliva in the mouth is absorbed to the resin base formed of resin on the bracket base, causing an unpleasant smell.

Also, in the bracket, the size of the bracket base is small. Accordingly, unless the resin base is formed larger, there may be an error. Then, the bracket cannot be accurately attached to the patient's tooth surface. If the resin base is formed larger in order to solve this limitation, saliva is absorbed more, causing an unpleasant smell much more.

In the bracket, the resin base is formed to be suitable to individual's teeth. If the resin base is detached during the orthodontic treatment, rebonding cannot be easily performed on the lingual surface of the teeth in the dental clinic. Accordingly, the bracket needs to be sent to the dental technical laboratory to be remanufactured.

Also, according to Korean Patent No. 10-0895946, processes of cutting a dental metal thin plate in order to form the metal base and adhering the dental metal thin plate closely to the tooth surface are complicated, and it is difficult to accurately adhere the metal thin plate closely to the tooth surface. Also, there is inconvenience in that the metal base and the bracket base need to be processed by silver soldering or laser welding. Also, the bracket base or the metal base may be separated around the soldering and welding parts.

### [Disclosure]

### [Technical Problem]

Accordingly, the present disclosure provides an individually tailored lingual orthodontic bracket and a method for manufacturing the bracket, which can be accurately bonded to the tooth surface, can reduce the risk of separation from the tooth surface by having a high adhesive force due to an expanded base, and can improve the orthodontic efficiency through easy rebonding even though the bracket is separated from the tooth surface.

### [Technical Solution]

In one general aspect, a method for manufacturing an individually tailored lingual orthodontic bracket includes: a first operation of fabricating a set-up model by cutting individual teeth from a malocclusion model that is modeled on the patient and rearranging the individual teeth in an ideal position; a second operation of replicating the set-up model; a third operation of performing pin work on the replicated set-up model and expanding the base of the bracket using a resin in accordance with the surface of teeth; a fourth operation of locating the bracket on the base expanded using the resin; a fifth operation of preparing casting by forming an ingate on the base expanded using the resin; a sixth operation of embedding an investment after the preparing of casting; and a seventh operation of burning out the resin from the base in which the investment is embedded and casting a melted material.

An individually tailored lingual orthodontic bracket and a method for manufacturing the bracket according to an embodiment of the present invention can be accurately bonded to the tooth surface, can reduce the risk of separation from the tooth surface by having a high adhesive force due to an expanded base, and can improve the orthodontic efficiency through easy rebonding even though the bracket is separated from the tooth surface.

Also, in a typical tailored bracket, since a slot, a ligation part, and a base are using the same material, a strong slot and ligation part, and a soft base required in the orthodontics cannot be achieved. However, in the present invention, since they can use materials having different properties, ideal physical properties required in the orthodontics can be achieved.

### [Description of Drawings]

FIG. 1 is a flowchart illustrating a method of manufacturing an individually tailored lingual orthodontic bracket according to an embodiment of the present invention.
FIG. 2 is a side view illustrating a bracket attached to the surface of tooth for a typical lingual orthodontic treatment.

### [Best Mode]

First, a method for manufacturing an individually tailored lingual orthodontic bracket will be described in detail.

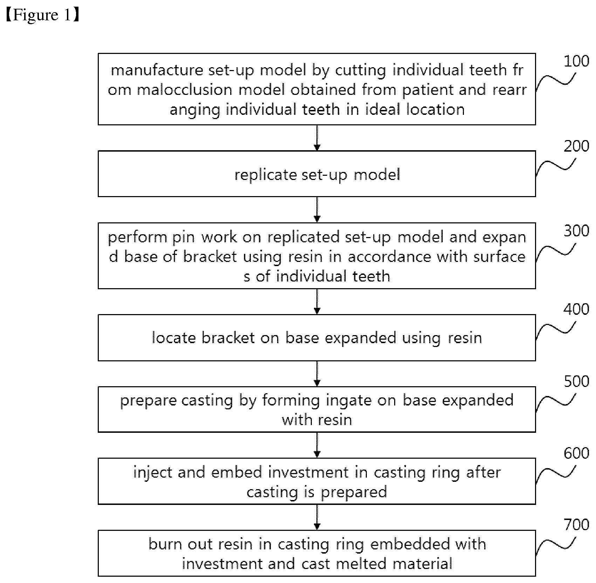

Referring to FIG. 1, a method for manufacturing an individually tailored lingual orthodontic bracket may includes fabricating a set-up model by cutting individual teeth from a malocclusion model that is modeled on the patient and rearranging the individual teeth in an ideal position (100); replicating the set-up model (200); performing pin work on the replicated set-up model and then expanding the base of the bracket using a resin in accordance with the surface of each tooth (300); locating the bracket on the base expanded using the resin (400); preparing casting by forming an ingate on the base expanded using the resin (500); embedding an investment after the preparing of casting (600); and burning out the resin from a casting ring in which the investment is embedded and casting a melted material (700).

In operation 400 of locating of the bracket, the bracket may be first located after the replicating of the set-up model, and then may be expanded on the base using resin.

In operation 300, the resin for expanding may include wax in accordance with the manufacturing methods.

Also, an individually tailored lingual orthodontic bracket is manufactured by the above-mentioned manufacturing method.

Hereinafter, the individually tailored lingual orthodontic bracket and the method for manufacturing the bracket will be described in more detail with reference to FIG. 1.

The individually tailored lingual orthodontic bracket may include a slot in which a wire is inserted to grant an orthodontic force, wings formed at both sides of the slot in order to fix the wire inserted into the slot with a rubber ring or a ligature wire, and a bracket base attached to a tooth surface. Accordingly, in implementation of the present invention, the type of the bracket used for the lingual orthodontics is not limited.

Hereinafter, a method for manufacturing the individually tailored lingual orthodontic bracket will be described.

### [First Operation] 100

First, a malocclusion model may be formed from a patient.

A set-up model in which individual teeth are cut from the model and rearranged in an ideal location may be manufactured.

In operation 100, the condition of the malocclusion may differ according to patients. After the malocclusion model is formed, individual teeth may be cut from the model and may be rearranged in the most ideal location to manufacture the set-up model.

### [Second Operation] 200

When the set-up model for malocclusion of a patient is manufactured in operation 100, the set-up model may be replicated.

### [Third Operation] 300

When the replication of the set-up model is completed in operation 200, a pin work may be performed on the replicated set-up model, and then the base may be expanded with a resin in accordance with the surfaces of individual teeth.

### [Fourth Operation] 400

When the base is expanded with a resin in accordance with the surfaces of individual teeth in operation 300, the bracket may be located on the based expanded using the resin.

In case of locating of the bracket, the bracket may be first located after completion of operation 200, and then may also be expanded on the base using resin in operation 300. This may conform to the manufacturing method. The preferential location or subsequent location of the bracket may be modified in accordance with the manufacturing methods, and is not limited to the above-mentioned manufacturing method.

### [Fifth Operation] 500

When the bracket is located on the base expanded with the resin in operation 400, an ingate may be formed on the base expanded with the resin, and casting may be prepared due to the formation of the ingate.

### [Sixth Operation] 600

When casting is prepared by forming the ingate in operation 500, an investment may be injected and embedded in a casting ring.

### [Seventh Operation] 700

The resin is burnt out from the casting ring embedded with the investment in operation 600, and the melted material may be cast.

When the melted material is cast in operation 700, an individually tailored bracket having the expanded base in accordance with the tooth surface of an individual patient may be completely manufactured.

In operation 300 of the method for manufacturing the individually tailored lingual orthodontic bracket, the resin for expanding may also be replaced with a wax in accordance with the manufacturing method, and the present invention is not limited to the resin and the wax.

Also, the individually tailored lingual orthodontic bracket according to the embodiment of the present invention may be manufactured by the above-mentioned method for manufacturing the bracket.

An individually tailored lingual orthodontic bracket and a method for manufacturing the bracket according to an embodiment of the present invention can be accurately bonded to the tooth surface, can reduce the risk of separation from the tooth surface by having a high adhesive force due to an expanded base, and can improve the orthodontic efficiency through easy rebonding even though the bracket is separated from the tooth surface.

Also, in a typical tailored bracket, since a slot, a ligation part, and a base are using the same material, a strong slot and ligation part, and a soft base required in the orthodontics cannot be achieved. However, in the present invention, since they can use materials having different properties, ideal physical properties required in the orthodontics can be achieved.

### [reference numerals]

100: first operation
200: second operation
300: third operation
400: fourth operation
500: fifth operation
600: sixth operation
700: seventh operation

## Claims

1. A method for manufacturing an individually tailored lingual orthodontic bracket, the method comprising: fabricating a set-up model by cutting individual teeth from a malocclusion model that is modeled on the patient and rearranging the individual teeth in an ideal position; replicating the set-up model; performing pin work on the replicated set-up model and expanding the base of the bracket using a resin in accordance with the surface of teeth; locating the bracket on the base expanded using the resin; preparing casting by forming an ingate on the base expanded using the resin; embedding an investment after the preparing of casting; and burning out the resin from a casting ring in which the investment is embedded and casting a melted material.

2. A method for manufacturing an individually tailored lingual orthodontic bracket, the method comprising: fabricating a set-up model by cutting individual teeth from a malocclusion model that is modeled on the patient and rearranging the individual teeth in an ideal position; replicating the set-up model; performing pin work on the replicated set-up model; locating the bracket on a surface of teeth of the replicated set-up model; expanding the base of the bracket using a resin in accordance with the surface of teeth; preparing casting by forming an ingate on the base expanded using the resin; embedding an investment after the preparing of casting; and burning out the resin from a casting ring in which the investment is embedded and casting a melted material.

3. The method of claim 1, wherein the resin used for the expanding comprises wax in accordance with manufacturing methods.

4. The method of claim 2, wherein the resin used for the expanding comprises wax in accordance with manufacturing methods.

5. An individually tailored lingual orthodontic bracket manufactured by the method of claim 1.

6. An individually tailored lingual orthodontic bracket manufactured by the method of claim 2.
